## Europäisches Patentamt
## European Patent Office
## Office européen des brevets

(19)

(11) Numéro de publication : **0 050 560 B1**

(12)

# FASCICULE DE BREVET EUROPÉEN

(45) Date de publication du fascicule du brevet :
03.04.85

(51) Int. Cl.⁴ : **G 01 V  1/20, H 01 R 13/28**

(21) Numéro de dépôt : **81401597.0**

(22) Date de dépôt : **14.10.81**

---

(54) **Raccord pour flûte sismique avec connecteurs à plat.**

---

(30) Priorité : **20.10.80 FR 8022362**

(43) Date de publication de la demande :
**28.04.82 Bulletin 82/17**

(45) Mention de la délivrance du brevet :
**03.04.85 Bulletin 85/14**

(84) Etats contractants désignés :
**AT BE CH DE GB IT LI LU NL SE**

(56) Documents cités :
**DE-A- 2 719 951
US-A- 3 376 948
US-A- 3 489 986
US-A- 3 786 410
US-A- 3 812 455
US-A- 4 114 970
US-A- 4 166 663**

(73) Titulaire : **ATELIERS MECANIQUES DE ST. GAUDENS
Route de Barbazan 31 Valentine
F-31800 St. Gaudens (FR)**

(72) Inventeur : **Bonneau, Robert Louis Gaston
Le Larmeou
F-31800 St. Gaudens (FR)**

(74) Mandataire : **Corre, Jacques Denis Paul et al
Cabinet Regimbeau 26, Avenue Kléber
F-75116 Paris (FR)**

Jouve, 18, rue St-Denis, 75001 Paris, France

# 0 050 560

**Description**

La présente invention concerne un connecteur à haute densité de contacts, utilisable tout particulièrement en prospection géophysique marine par méthode sismique.

L'invention a plus précisément pour objet un raccord pour flûte sismique destiné à assurer des liaisons mécaniques et électriques entre les câbles de traction ou tirants et les faisceaux de conducteurs respectifs de deux éléments de flûte sismique à relier.

Il est classique de remorquer à l'aide d'un navire une flûte sismique composée d'éléments multiples reliés entre eux et sur laquelle sont distribués de nombreux capteurs dits hydrophones, destinés à recueillir les ondes acoustiques consécutives à un ébranlement émis par une source sismique. Les informations recueillies par les capteurs sont transmises, à l'aide d'un câble à conducteurs multiples, à un enregistreur situé sur le navire.

En général, on utilise, pour relier les différents éléments de flûte entre eux et au navire, des raccords de forme cylindrique. Les tirants de traction des deux éléments de flûte sismique à relier sont fixés aux extrémités d'un boîtier rigide allongé ; celui-ci est souvent en deux pièces, assemblées pour assurer la liaison mécanique nécessaire à la traction de la flûte. La liaison électrique entre les faisceaux de conducteurs est, elle, assurée par des éléments de connecteur, respectivement mâle et femelle, logés à l'intérieur du boîtier, tandis que les faisceaux de conducteurs traversent les extrémités du boîtier. Le boîtier reçoit également la gaine qui est classiquement prévue sur chaque section de flûte pour enclore les tirants et les faisceaux de conducteurs.

Comme cela est décrit par exemple dans les documents US-A-3 376 948 et US-A-3 786 410, d'une façon générale, les éléments de connecteur sont disposés radialement dans le boîtier. Cette disposition qui a rendu de grands services, permet que l'effort de traction exercé sur les tirants soit peu ressenti au niveau des connecteurs.

Le document US-A-3 786 410, plus précisément, concerne un raccord comprenant deux éléments de raccord fixés aux extrémités de tirants respectifs et supportant des éléments de connecteurs à contact axial. Les éléments de raccord sont assemblés grâce à un manchon externe venant en appui d'une part contre une butée périphérique prévue sur l'un des éléments de raccord, et venant en prise d'autre part par filetage sur l'autre élément de raccord.

Il a été observé cependant que cette disposition axiale des contacts tend à limiter le nombre de connexions permises, pour un diamètre donné du boîtier. Cela limite par là même le nombre d'hydrophones qui peuvent être montés sur la flûte, alors que la tendance actuelle est à en utiliser beaucoup, pour acquérir un maximum d'informations.

Comme cela est décrit dans le document DE-A-2 719 951 ou encore dans le document US-A-3 812 455, on a tenté de remédier à ces inconvénients en utilisant des connecteurs à contact radial.

Le document DE-A-2 719 951 précité concerne plus précisément un raccord pour flûte sismique comprenant deux corps internes séparables comportant chacun une tête d'extrémité et un prolongement supportant un élément de connecteur. Pour assurer la coopération des connecteurs, les prolongements des corps internes sont ancrés réciproquement. L'étanchéité du dispositif est assurée par un manchon extérieur recouvrant les corps internes. L'effort de traction est exercé sur le raccord par des tirants fixés aux têtes d'extrémité.

Le document US-A-3 812 455 concerne un raccord similaire. Ce document concerne en effet un raccord comprenant deux corps séparables présentant chacun une tête d'extrémité et un prolongement supportant un connecteur à contact radial. Les prolongements des corps sont assemblés rigidement par l'intermédiaire de moyens filetés transversaux afin d'assurer une liaison mécanique apte à supporter la traction exercée par les tirants reliés aux têtes d'extrémité. Le raccord est par ailleurs dépourvu de manchon externe.

La présente invention concerne un raccord pour flûte sismique du genre décrit dans DE-A-2 719 951, et comprend plus précisément :

a) un boîtier composé

— d'un manchon externe cylindrique qui loge

— deux corps internes séparables comportant chacun

une tête d'extrémité de section droite circulaire, définissant l'une respective des extrémités du boîtier,

chaque tête d'extrémité comportant un évidement axial traversant,

un prolongement solidaire de ladite tête d'extrémité et qui s'étend vers l'intérieur du boîtier, à partir de cette tête d'extrémité, généralement d'un côté d'un plan axial du boîtier, vers la tête d'extrémité de l'autre corps interne,

chaque prolongement comportant des structures transversales aptes à venir en prise avec les structures transversales homologues du prolongement de l'autre corps interne, et

chaque prolongement définissant un support axial de connecteur en vis-à-vis de l'autre prolongement

b) des tirants axiaux fixés respectivement aux têtes d'extrémité pour transmettre une traction à la flûte sismique,

2

c) au moins un connecteur mâle et un connecteur femelle fixés respectivement sur les supports de connecteur, en vis-à-vis, lesdits connecteurs comportant des éléments de contact électriques respectifs, généralement radiaux, qui sont reliés à des faisceaux de conducteurs électriques traversant les évidements axiaux des têtes d'extrémité.

Cependant, on a constaté que dans les raccords classiques les contacts radiaux sont soumis à des contraintes élevées et que par ailleurs, en service, il est actuellement difficile d'intervenir pour réparation sur un élément de flûte. En effet, il faut non seulement ouvrir les raccords qui l'encadrent, mais aussi désolidariser les conducteurs des éléments de connecteur, ce dernier ne pouvant sortir du raccord relié à leurs faisceaux. Cette dernière opération délicate peut rarement être conduite à bord d'un navire. En pratique, les usagers sont donc conduits à remplacer l'élément tout entier, d'où il résulte de sérieux impératifs d'approvisionnement pour chaque campagne de prospection marine. Cet inconvénient croît naturellement en importance avec le nombre de capteurs et de connexions de la flûte.

La présente invention vient améliorer nettement la situation.

Un but de la présente invention est de proposer un type de raccord dont les éléments de connecteur permettent de relier un nombre plus important de conducteurs (pour 200 capteurs par exemple).

Un autre but de la présente invention est de proposer un type de raccord qui soit simple et robuste, et autorise facilement les interventions pour réparation sur un élément de flûte.

A cette fin, le raccord pour flûte sismique conforme à la présente invention est caractérisé par le fait que :

— les tirants sont ancrés chacun dans un alésage axial sur les têtes d'extrémité des corps internes,

— l'une au moins des têtes d'extrémité comporte par ailleurs une butée périphérique qui délimite une surface d'appui radiale tournée vers l'extérieur du manchon,

— le manchon comprend au moins une partie munie d'une butée périphérique interne délimitant une surface d'appui radiale tournée vers l'intérieur du manchon et apte à venir en appui direct contre ladite butée périphérique de la tête d'extrémité de l'un des corps internes, et ladite partie du manchon étant en outre adaptée pour venir en prise par filetage avec une portion du boîtier liée axialement à la tête d'extrémité de l'autre corps interne pour solliciter axialement les têtes d'extrémité l'une vers l'autre et éviter toute application de contrainte sur les prolongements et connecteurs prévus sur ceux-ci, lorsqu'une force de traction est exercée sur la flûte par l'intermédiaire des tirants

— la section de l'évidement axial traversant prévu dans chaque tête d'extrémité est telle qu'elle permet le passage des connecteurs reliés aux faisceaux de conducteurs électriques associés, sans démontage des tirants.

De préférence, chaque tête d'extrémité comporte une butée périphérique en saillie qui délimite une surface d'appui radiale tournée vers l'extérieur du manchon, et le manchon externe est en deux parties aptes à venir en prise par filetage, et comprenant chacune une butée périphérique interne délimitant une surface d'appui radiale tournée vers l'intérieur du manchon pour venir en appui direct contre la butée périphérique en saillie de l'une des têtes d'extrémité respectivement.

De façon avantageuse, des joints toriques respectifs sont insérés entre l'une des têtes des corps internes et le manchon, entre le manchon et ladite portion du boîtier, et entre ladite portion du boîtier et l'autre tête, afin d'assurer l'étanchéité du raccord.

Selon un mode de réalisation avantageux de l'invention, les têtes des corps internes sont respectivement munies d'embouts à gorge annulaire destiné à recevoir sous serrage les gaines étanches de chacune des deux parties de flûte à relier et le manchon s'étend suffisamment pour recouvrir lesdits embouts.

Selon un mode de réalisation préféré, les têtes des corps internes sont munies d'alésages borgnes partiellement filetés, au point de fixation de chaque tirant, l'extrémité de chaque tirant possède une tête élargie suivie d'une douille à filetage externe, et après engagement de la tête de tirant dans son alésage, la douille filetée vient assurer une fixation par serrage bloquée du tirant sur la tête du corps interne correspondant.

Selon un mode de réalisation particulier, dans chaque prolongement, de forme générale demi-cylindrique ou demi-prismatique, il est prévu en partie centrale du boîtier des moyens pour fixer radialement les deux prolongements axiaux l'un sur l'autre, tandis que leur ancrage s'effectue à leur extrémité.

De préférence, les moyens de fixation radiale des deux prolongements sont formés d'une part d'un alésage fileté prévu dans la partie centrale desdits prolongements, d'autre part, d'une vis de fixation engagée radialement sur l'un des prolongements, une bague de butée fixée en partie médiane de la vis de fixation interdisant tout déplacement longitudinal de la vis par rapport au prolongement qui la reçoit, de façon à assurer le rapprochement et la solidarisation des prolongements lors du serrage de la vis dans l'autre prolongement et l'écartement des prolongements lors du desserrage de la vis.

Selon un autre mode de réalisation avantageux de l'invention, chaque prolongement définit au moins deux emplacements longitudinaux et adjacents pour éléments de connecteur, et il est prévu des zones d'appui et de fixation pour les connecteurs.

Selon un mode de réalisation avantageux de la présente invention, chaque tête d'extrémité possède trois fixations de tirant régulièrement réparties autour de son axe, et l'évidement axial traversant est consitué d'un alésage central et de trois lobes s'insérant entre les fixations de tirant, deux de ces lobes

3

**0 050 560**

permettant le passage des connecteurs tandis que le troisième permet le passage des conducteurs qui leur sont reliés.

Selon un autre mode de réalisation avantageux de l'invention, les tirants respectifs des deux parties de flûte à relier se trouvent alignés deux à deux lors de l'ancrage des deux prolongements l'un sur l'autre.

D'autres caractéristiques additionnelles et avantages de l'invention apparaîtront à la lecture de la description détaillée qui va suivre, faite en référence aux dessins annexés, donnés à titre d'exemple non limitatif et sur lesquels :

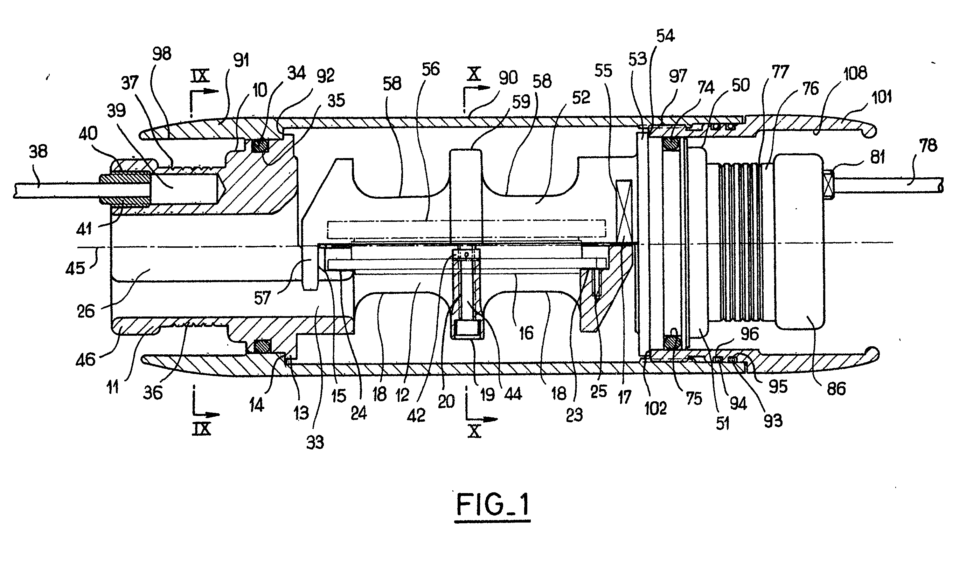

la figure 1   représente une vue en coupe longitudinale du raccord assemblé ;

la figure 2   représente une vue en perspective de l'un des corps internes ;

la figure 3   représente une vue de gauche du raccord de la figure 1 ;

la figure 4   représente une vue en coupe du raccord selon la ligne de coupe IX-IX de la figure 1 ; et

la figure 5   représente une vue en coupe du raccord selon la ligne de coupe X-X de la figure 1.

Le raccord selon l'invention se compose de deux corps internes 10 et 50 et d'un manchon 90 sensiblement cylindrique. Chaque corps interne comprend une tête d'extrémité 11 et 51 et s'étend axialement vers l'intérieur du raccord pour former deux prolongements 12 et 52, destinés à être ancrés l'un sur l'autre, comme il sera expliqué dans la suite de la description.

Les têtes 11 et 51 des corps internes 10 et 50 comportent chacune une butée périphérique 13 et 53 en saillie délimitant des surfaces 14 et 54 tournées vers l'extérieur du raccord, destinées à assurer l'assemblage du raccord comme l'on verra dans la suite de l'exposé.

Chaque prolongement comporte au moins une rainure transversale 15 et 55, et de préférence, deux, puis une zone formant emplacement de connecteur 16 et 56, enfin au moins une saillie transversale 17 et 57, et de préférence deux, en extrémité du prolongement. Cette saillie 17 ou 57 vient en prise sur la rainure transversale 15 ou 55 homologue de l'autre prolongement.

Chaque prolongement est de forme générale demi-cylindrique ou demi-prismatique creuse, échancrée au niveau de la zone des connecteurs, en 18 et 58, sauf dans sa partie centrale 19 et 59 où sont prévus des moyens 44 pour fixer radialement les deux prolongements axiaux 12 et 52 l'un sur l'autre.

Ces moyens de fixation sont formés comme suit : l'un des supports axiaux 12 est muni dans sa partie centrale 19 d'un alésage 20 fileté par lequel l'on engage une vis de fixation 44.

La vis 44 est d'une manière préférentielle filetée sur la moitié de sa longueur, et l'autre moitié s'étendant entre la tête de la vis et la zone filetée est d'un diamètre inférieur à celui de l'alésage 20, de façon à permettre l'engagement de la vis 44. L'autre support axial 52 est lui aussi muni dans sa partie centrale 59 d'un alésage 60 fileté destiné à recevoir la vis 44 traversant l'alésage fileté 20 du premier support axial 12. Une bague de butée 42 est fixée à l'aide d'une goupille 43 en partie intermédiaire de la vis de fixation 44.

On comprend que l'ancrage des deux prolongements axiaux 12 et 52 l'un sur l'autre est assuré à l'aide des saillies 17 et 57 venant en prise sur la rainure transversale 15 et 55 homologue de l'autre prolongement ; le maintien en position d'ancrage est réalisé par la vis de fixation 44 engagée dans l'alésage 20 fileté du support axial, vis sur laquelle l'on enfile une bague de butée 42 que l'on immobile à l'aide d'une goupille 43, et que l'on serre dans le filetage de l'alésage 60 du support axial 52.

Lorsque l'on desserre la vis 44, la bague de butée 42 évite un déplacement en translation de la vis 44 par rapport au support axial 12. Les deux supports axiaux 12 et 52 se séparent donc et par là même les éléments mâle et femelle du connecteur.

Chaque prolongement 12 et 52 définit deux emplacements 21, 22 et 61, 62 pour éléments de connecteur (110, 111, 112 et 113). Ces emplacements de connecteur 21, 22 et 61, 62 comportent à leurs extrémités des zones d'appui 23, 24 et de fixation pour les connecteurs.

Les éléments de connecteur 110, 111, 112 et 113 sont fixés sur les zones d'appui des emplacements de connecteur à l'aide de vis telles que 25 qui prennent position dans les alésages filetés 46, 47, 48 et 49.

Chaque tête 11 et 51 des corps internes 10 et 50 possède trois alésages 30, 31 et 32 borgnes, partiellement filetés régulièrement répartis autour de son axe 45, ainsi qu'un évidement axial 26 traversant. Cet évidement axial traversant 26 est constitué d'un alésage central 26 et de trois lobes 27, 28, 29, s'insérant entre les trois alésages borgnes 30, 31 et 32. Deux de ces lobes 27 et 28 permettent le passage des deux éléments de connecteur 110 et 111, ou 112 et 113, tandis que le troisième lobe 29 permet le passage des conducteurs qui leur sont reliés.

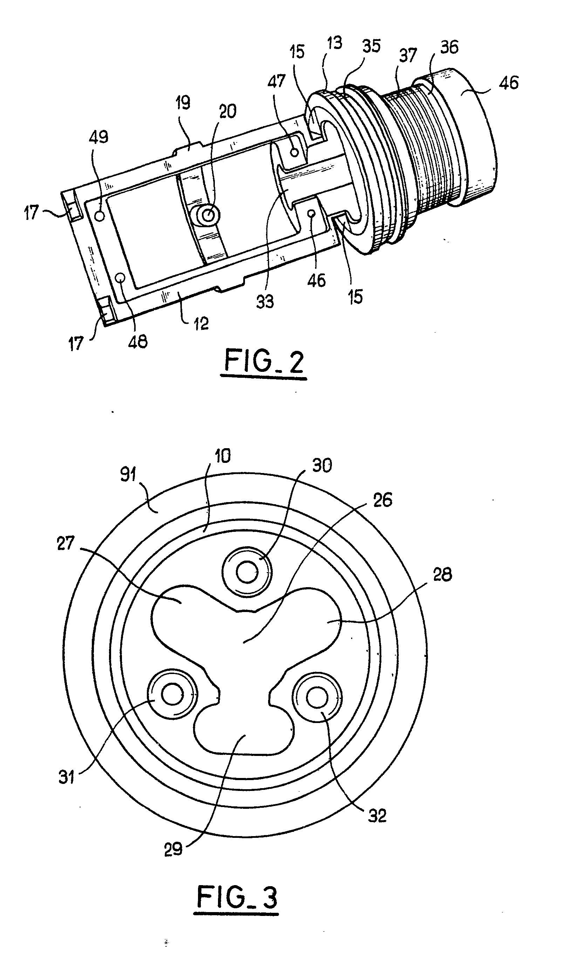

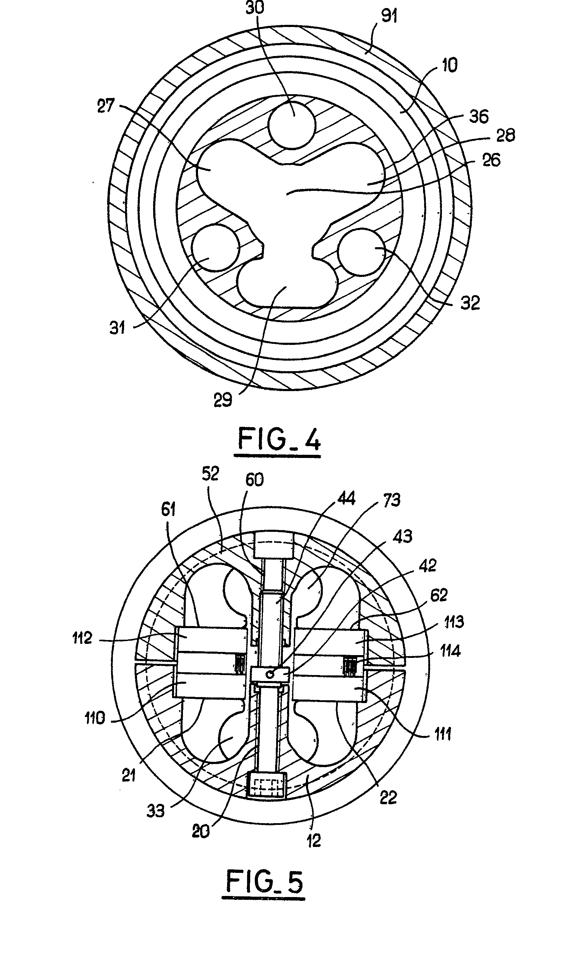

Comme le montrent la figure 2 et la figure 5, chaque prolongement 12 et 52 est en outre muni, en sa partie adjacente aux têtes des corps internes 11 et 51, d'un alésage 33 qui aboutit dans l'évidement axial traversant 26, destiné à recevoir les faisceaux de conducteurs.

Chaque tête 11 et 51 des corps internes 10 et 50 possède en outre à sa périphérie une gorge annulaire 35 et 75, destinée à recevoir un joint torique, 34 et 74 respectivement.

Chaque tête 11 et 51 des corps internes 10 et 50 possède également un embout 36 et 76 muni d'une saillie annulaire extrême 46 et 86 et de gorges annulaires 37 et 77 destinées à recevoir sous serrage les gaines étanches de chacune des deux parties de flûte à relier, le manchon 90 s'étendant suffisamment pour recourir les embouts 37 et 77, en 98 et 108.

On comprend que chaque tirant tel que 38, possède une tête élargie 39 qui vient s'engager dans un des alésages borgnes partiellement filetés 30, 31 ou 32. La tête 39 y est maintenue par serrage bloqué d'une douille 41, enfilée sur le tirant 38, dans le filetage 40 de l'alésage borgne.

4

Le manchon 90 est formé de deux parties 101 et 91 respectivement mâle et femelle susceptibles d'être assemblées à l'aide d'un filetage 97.

La partie extrême de la partie mâle 101 du manchon forme une butée délimitée par la surface 102 tournée vers l'intérieur du raccord et destinée à prendre appui sur la surface de butée 54, tournée vers l'extérieur du raccord, du corps interne 50.

La partie femelle 91 du manchon possède elle une butée à sa périphérie interne délimitée par la surface 92 tournée vers l'intérieur du raccord et destinée à prendre appui sur la surface de butée 14, tournée vers l'extérieur du raccord, du corps interne 10.

L'on comprend qu'ainsi lors de l'assemblage du manchon les surfaces 102 et 92 prennent appui sur les surfaces 54 et 14 des têtes des corps internes et que l'on assure ainsi la rigidité mécanique du raccord et donc une liaison mécanique entre les tirants respectifs des deux parties de flûte à relier.

Afin de régler la flottabilité des flûtes, on remplit les flûtes d'un fluide léger tel que le kérosène ; il est donc nécessaire d'assurer l'étanchéité du raccord.

Lors de cet assemblage les deux parties 91 et 101 du manchon viennent serrer les joints toriques 34 et 74 disposés dans les gorges annulaires 35 et 75 des têtes des corps internes, afin d'assurer l'étanchéité du raccord. Cette étanchéité est complétée à l'aide de deux joints toriques 93 et 94 disposés dans les gorges annulaires 95 et 96 de la partie 101 du manchon et serrés par la partie femelle du manchon 91 lors de l'assemblage.

Le montage du raccord est obtenu par les différentes opérations suivantes. Les éléments de connecteur respectivement mâle et femelle 110, 111 et 112, 113, reliés à leurs faisceaux de conducteurs, sont passés par l'évidement 26, comme décrit ci-dessus, à travers la tête de corps interne.

Les éléments de connecteur 110 et 111 de l'un des éléments de flûte à relier sont introduits dans les lobes 27 et 28, et les faisceaux de conducteurs correspondants dans le lobe 29. Il est fait de même pour les éléments de connecteur 112 et 113 de l'autre élément de flûte à relier. Les éléments de connecteur 112 et 113 sont alors retournés de 180° sur eux-mêmes de façon à éviter que les faisceaux de conducteurs se trouvent situés entre les parties respectivement mâle et femelle des connecteurs.

Les faisceaux de conducteurs sont disposés dans l'alésage 33 et les éléments de connecteurs sont alors fixés à leurs emplacements respectifs à l'aide de vis telles que 25.

Les tirants sont fixés aux têtes des pièces internes, et chaque gaine étanche est emboutie et serrée sur un embout 36 ou 76.

Les deux prolongements axiaux 12 et 52 sont ancrés l'un sur l'autre, lorsque les saillies transversales 17 et 57 viennent en prise dans les rainures transversales 15 et 55, puis fixés l'un à l'autre à l'aide de la vis 44 munie de sa bague de butée tel que décrit précédemment.

Le manchon est alors assemblé de façon à assurer la liaison mécanique entre les deux éléments de flûte à relier, et l'étanchéité du raccord. La surface extérieure du manchon est munie de reliefs et de préférence de trous borgnes destinés à recevoir les outils qui permettent le contrôle du serrage du manchon.

On comprend que le démontage du manchon est réalisé simplement par les opérations précédemment décrites, prises dans un ordre inversé.

De façon générale, l'invention n'est pas limitée à l'exemple de réalisation ci-dessus décrit et représenté. Par exemple, on pourra aisément adapter la structure décrite au cas où la flûte comporterait quatre tirants.

## Revendications

1. Raccord pour flûte sismique comprenant
   a) un boîtier composé
   — d'un manchon (90) externe cylindrique qui loge
   — deux corps internes (10, 50) séparables comportant chacun
       une tête d'extrémité (11, 51) de section droite circulaire, définissant l'une respective des extrémités du boîtier,
       chaque tête d'extrémité comportant un évidement axial traversant (26),
       un prolongement (12, 52), solidaire de ladite tête d'extrémité et qui s'étend vers l'intérieur du boîtier, à partir de cette tête d'extrémité, généralement d'un côté d'un plan axial du boîtier, vers la tête d'extrémité de l'autre corps interne,
       chaque prolongement comportant des structures transversales (15, 17 ; 55, 57) aptes à venir en prise avec les structures transversales homologues du prolongement de l'autre corps interne, et
       chaque prolongement définissant un support axial de connecteur en vis-à-vis de l'autre prolongement
   b) des tirants axiaux (38, 78) fixés respectivement aux têtes d'extrémité pour transmettre une traction à la flûte sismique,
   c) au moins un connecteur mâle et un connecteur femelle (110-113) fixés respectivement sur les supports de connecteur, en vis-à-vis, lesdits connecteurs comportant des éléments de contact électriques respectifs, généralement radiaux, qui sont reliés à des faisceaux de conducteurs électriques traversant les évidements axiaux des têtes d'extrémité,

caractérisé par le fait que

— les tirants (38, 78) sont ancrés chacun dans un alésage axial sur les têtes d'extrémité (11, 51) des corps internes (10, 50),

— l'une au moins des têtes d'extrémité comporte par ailleurs une butée périphérique (13) qui délimite une surface d'appui radiale (14) tournée vers l'extérieur du manchon,

— le manchon (90) comprend au moins une partie (91) munie d'une butée périphérique interne délimitant une surface d'appui radiale (92) tournée vers l'intérieur du manchon et apte à venir en appui direct contre ladite butée périphérique de la tête d'extrémité (11) de l'un des corps internes (10), et ladite partie (91) du manchon étant en outre adaptée pour venir en prise par filetage avec une portion (101) du boîtier liée axialement à la tête d'extrémité (51) de l'autre corps interne (50) pour solliciter axialement les têtes d'extrémité (11, 51) l'une vers l'autre et éviter toute application de contrainte sur les prolongements (12, 52) et connecteurs prévus sur ceux-ci, lorsqu'une force de traction est exercée sur la flûte par l'intermédiaire des tirants (38),

— la section de l'évidement axial traversant (26) prévu dans chaque tête d'extrémité (11, 51) est telle qu'elle permet le passage des connecteurs reliés aux faisceaux de conducteurs électriques associés, sans démontage des tirants.

2. Raccord pour flûte sismique selon la revendication 1, caractérisé par le fait que

chaque tête d'extrémité (11, 51) comporte une butée périphérique en saillie (13, 53), qui délimite une surface d'appui radiale (14, 54) tournée vers l'extérieur du manchon, et

le manchon externe (90) est en deux parties (91, 101) aptes à venir en prise par filetage et comprenant chacune une butée périphérique interne (92, 102) délimitant une surface d'appui radiale tournée vers l'intérieur du manchon pour venir en appui direct contre la butée périphérique en saillie (13, 53) de l'une des têtes d'extrémité (11, 51) respectivement.

3. Raccord selon la revendication 2, caractérisé par le fait que des joints toriques respectifs (34, 74, 93 et 94) sont insérés entre l'une (11) des têtes des corps internes et le manchon, entre le manchon (90) et ladite portion (101) du boîtier, et entre ladite portion (101) du boîtier et l'autre tête (51), afin d'assurer l'étanchéité du raccord.

4. Raccord selon l'une des revendications 1 à 3, caractérisé par le fait que les têtes des corps internes sont respectivement munies d'embouts (76) à gorges annulaires (77) destinés à recevoir sous serrage les gaines étanches de chacune des deux parties de flûte à relier, et que le manchon s'étend suffisamment pour recouvrir lesdits embouts.

5. Raccord selon l'une des revendications 1 à 4, caractérisé par le fait que les têtes des corps internes sont munies d'alésages borgnes partiellement filetés, au point de fixation de chaque tirant, que l'extrémité de chaque tirant possède une tête élargie (39) suivie d'une douille à filetage externe (41), et qu'après engagement de la tête de tirant dans son alésage, la douille filetée vient assurer une fixation par serrage bloqué du tirant sur la tête du corps interne correspondant.

6. Raccord selon l'une des revendications 1 à 5, caractérisé par le fait que dans chaque prolongement, de forme générale demi-cylindrique ou demi-prismatique creuse, échancrée au niveau de la zone des connecteurs, il est prévu en partie centrale du boîtier des moyens (20, 42, 43, 44) pour fixer radialement les deux prolongements axiaux l'un sur l'autre, tandis que leur ancrage s'effectue à leurs extrémités.

7. Raccord selon la revendication 6, caractérisé par le fait que les moyens de fixations radiale des deux prolongements sont formés, d'une part, d'un alésage fileté (20) prévu dans la partie centrale desdits prolongements, d'autre part, d'une vis de fixation (44) engagée radialement sur l'un des prolongements, une bague de butée (42) fixée en partie médiane de la vis de fixation interdisant tout déplacement longitudinal de la vis par rapport au prolongement qui la reçoit, de façon à assurer le rapprochement et la solidarisation des prolongements lors du serrage de la vis dans l'autre prolongement et l'écartement des prolongements lors du desserrage de la vis.

8. Raccord selon l'une des revendications 1 à 7, caractérisé par le fait que chaque prolongement définit au moins deux emplacements longitudinaux et adjacents (21, 22 et 61, 62) pour éléments de connecteur, et par le fait qu'il est prévu des zones (23 et 24) d'appui et de fixation pour les connecteurs.

9. Raccord selon l'une des revendications 1 à 8, caractérisé par le fait que chaque tête d'extrémité possède trois fixations de tirant (30, 31, 32) régulièrement réparties autour de son axe (45), et par le fait que l'évidement axial traversant est constitué d'un alésage central (26) et de trois lobes s'insérant entre les fixations de tirant, deux de ces lobes (27 et 28) permettant le passage des connecteurs, tandis que le troisième (29) permet le passage des conducteurs qui leur sont reliés.

10. Raccord selon l'une des revendications 1 à 9, caractérisé par le fait que les tirants respectifs des deux parties de flûte à relier se trouvent alignés deux à deux lors de l'ancrage des deux prolongements l'un sur l'autre.

**Claims**

1. A seismic cable junction comprising

a) a casing composed of
— an external cylindrical sleeve (90) which houses
— two separable internal bodies (10, 50) each having
an end head (11, 51) with a right circular cross-section, defining one of the respective ends of the casing,
each end head having a axial through-bore (26),
an extension (12, 52), solid with the said end head and which extends, from this end head, towards the interior of the casing generally to one side of an axial plane of the casing, towards the end head of the other internal body,
each extension having transverse structures (15, 17 ; 55, 57) adapted to come into engagement with analogous transverse structures of the extension of the other internal body, and
each extension defining an axial connection support opposite the other extension
b) axial tie-rods (38, 78) fixed respectively to the end heads for transmitting traction to the seismic cable,
c) at least one male connection and one female connection (110-113) respectively fixed on the connection supports, opposite each other, the said connections having respective, generally radial, electrical contact elements, which are connected to a bundle of electric conductors passing through the axial bores in the end heads,
characterised by the fact that
— the tie-rods (38, 78) are anchored in an axial drilling in the respective end heads (11, 51) of the internal bodies (10, 50),
— one at least of the end heads having in addition a peripheral abutment (13) which delimits a radial support surface (14) extending towards the outside of the sleeve,
— the sleeve (90) comprises at least one part (91) provided with an internal peripheral abutment delimiting a radial support surface (92) extending towards the inside of the sleeve and adapted to directly supports against the said peripheral abutment of the end head (11) of one of the internal bodies (10), and the said part (91) of the sleeve being in addition adapted to engage by threading with a portion (101) of the casing axially connected to the end head (51) of the other internal body (50) for axially acting on the end heads (11, 51) the one towards the other, and avoiding application of any constraint on the extensions (12, 52) and connections provided on these, when towing force is exerted on the cable by the tie-rods (38),
— the cross-section of the axial through-bore (26) provided in each end head (11, 51) is such that it permits passage of the connections connected to the bundle of associated electrical conductors, without dismounting of the tie-rods.

2. A seismic cable junction according to claim 1, characterised by the fact that each end head (11, 51) has a jutting-out peripheral abutment (13, 53), which delimits a radial support surface (14, 54) extending towards the outside of the sleeve, and the external sleeve (90) is in two parts (91, 101) adapted to engage by threading and each comprising an internal peripheral abutment (92, 102) delimiting a radial support surface extending towards the inside of the sleeve for directly abutting against the jutting-out peripheral abutment (13, 53) of the respective one of the end heads (11, 51).

3. A seismic cable junction according to claim 2, characterised by the fact that respective O-rings (34, 74, 93 & 94) are inserted between the one (77) of the heads of the internal bodies and the sleeve, between the sleeve (90) and the said portion (101) of the casing, and between the said portion (101) of the casing and the other head (51), in order to assure watertightness of the junction.

4. A seismic cable junction according to any one of claims 1 to 3, characterised by the fact that the heads of the internal bodies are respectively provided with necks (76) having annular grooves (77) intended to have pressed-on watertight sheaths of each of the two parts of the cable to be connected, and that the sleeve extends sufficiently for covering the said necks.

5. A seismic cable junction according to any one of claims 1 to 4, characterised by the fact that the heads of the internal bodies are provided with partially threaded blind drillings at the fixing point of each tie-rod, that the end of each tie-rod has an enlarged head (39) followed by an externally threaded nipple (41), and that after engagement of the head of the tie-rod in its drilling, the threaded nipple assures fixing by clamped tightening of the tie-rod on the head of the corresponding internal body.

6. A seismic cable junction according to any one of claims 1 to 5, characterised by the fact that in each extension, of a hollow generally semi-cylindrical or semi-prismatic form indented in the region of the connections, is provided in a central part of the casing with means (20, 42, 43, 44) for radially fixing the two axial extensions to each other, whilst their anchoring is effected at their ends.

7. A seismic cable junction according to claim 6, characterised by the facts that the radial fixing means of the two extensions are formed on the one hand by a threaded drilling (20) provided in the central part of the said extensions, and on the other hand by a fixing screw (44) radially engaged in one of the extensions, an abutment collar (42) fixed medially to the fixing screw preventing all longitudinal displacement of the screw with respect to the extension which receive it, in a manner to assure bringing together and unifying of the extensions on tightening of the screw in the other extension, and the spacing of the extensions on unscrewing of the screw.

8. A seismic cable junction according to any one of claims 1 to 7, characterised by the fact that each extension defines at least two longitudinal and adjacent emplacements (21, 22 and 61, 62) for connection elements, and by the fact it is provided with support and fixing zones (23 and 24) for the connections.

9. A seismic cable junction according to any one of claims 1 to 8, characterised by the fact that each end head has three tie-rod fixings (30, 31, 32) regularly spaced about its axis (45), and by the fact that the axial throughbore is constituted by a central drilling (26) and three lobes inserted between the tie-rod fixings, two of these lobes (27 and 28) permitting passage of the connections, whilst the third (29) permits passage of the conductors to which they are connected.

10. A seismic cable junction according to any one of claim 1 to 9, characterised by the fact that the respective tie-rods of the two parts of the cable are aligned two to two on anchoring of the two extensions the one to the other.


**Ansprüche**

1. Verbinder für eine seismische Sammelleitung, umfassend
a) ein Gehäuse, zusammengesetzt aus
— einem äußeren zylindrischen Mantel (90), und
— zwei darin enthaltenen, voneinander trennbaren Innenkörpern (10, 50), jeweils mit einem einen geradlinig kreisförmigen Querschnitt aufweisenden Endkopf (11, 51) welcher das jeweilige Ende des Gehäuses darstellt,
wobei jeder Endkopf einen ihn axial durchsetzenden Durchlaß (26) aufweist, und einer fest mit dem Endkopf verbundenen Verlängerung (12, 52), welche sich von dem Endkopf aus im wesentlichen entlang einer Seite einer axialen Ebene in Richtung auf den Endkopf des anderen Innenkörpers erstreckt,
wobei jede Verlängerung in Querrichtung angeordnete Ausbildungen (15, 17 ; 55, 57) aufweist, welche mit gleichartigen in Querrichtung angeordneten Ausbildungen der Verlängerung des anderen Innenkörpers in Eingriff bringbar sind, und
wobei jede Verlängerung eine axiale Halterung für einen Verbinder gegenüber der jeweils anderen Verlängerung aufweist,
b) an den Endköpfen befestigte axiale Zugglieder (38, 78) für die Übertragung einer Zugkraft auf die seismische Sammelleitung, und
c) wenigstens einen männlichen Verbinder und einen weiblichen Verbinder (110-113), welche einander gegenüber an den Verbinderhalterungen befestigt sind und jeweils radial angeordnete elektrische Kontaktelemente enthalten, welche mit durch die axialen Durchlässe der Endköpfe hindurchgeführten elektrischen Leiterbündeln verbunden sind,
dadurch gekennzeichnet, daß
— die Zugglieder (38, 78) jeweils in einer axialen Bohrung in den Endköpfen (11, 51) der Innenkörper (10, 50) verankert sind,
— daß wenigstens einer der Endköpfe außerdem einen sich in Umfangsrichtung erstreckenden Anschlag (13) aufweist, welcher eine dem Äußeren des Mantels zugewandte radiale Stützfläche (14) darstellt,
— daß der Mantel (90) wenigstens ein Teil (91) aufweist, welches mit einem entlang dem inneren Umfang verlaufenden Anschlag versehen ist, welcher eine dem Inneren des Mantels zugewandte radiale Stützfläche (92) darstellt, welche in direkte Stützanlage an dem in Umfangsrichtung verlaufenden Anschlag des Endköpfs (11) des einen Innenkörpers (10) bringbar ist, wobei das genannte Teil (91) des Mantels außerdem in Gewindeeingriff mit einem Teil (101) des Gehäuses bringbar ist, welches in Axialrichtung mit dem Endkopf (51) des anderen Innenkörpers (50) verbunden ist, um die Endköpfe (11, 51) in Axialrichtung aufeinander zu belasten und die Einwirkung jedweder Belastung auf die Verlängerungen (12, 52) und die an diesen angebrachten Verbinder bei Ausübung einer Zugkraft auf die Sammelleitung mittels der Zugglieder (38) auszuschließen, und
— daß der Querschnitt des in jedem Endkopf (11, 51) vorgesehenen axialen Durchlasses (26) so bemessen ist, daß er den Durchtritt der mit den zugeordneten elektrischen Leiterbündeln verbundenen Verbinder ohne Demontage der Zugglieder gestattet.

2. Verbinder für eine seismische Sammelleitung nach Anspruch 1, dadurch gekennzeichnet, daß jeder Endkopf (11, 51) einen sich in Umfangsrichtung erstreckenden, hervorstehenden Anschlag (13, 53) aufweist, welcher eine dem Äußeren des Mantels zugewandte radiale Stützfläche (14, 54) darstellt, und daß der äußere Mantel (90) zwei Teile (91, 101) aufweist, welche in gegenseitigen Gewindeeingriff bringbar sind und jeweils einen sich in Umfangsrichtung erstreckenden inneren Anschlag (92, 102) aufweisen, welcher eine dem Inneren des Mantels zugewandte radiale Stützfläche darstellt und an welchem der sich in Umfangsrichtung erstreckende, hervorstehende Anschlag (13, 52) des jeweiligen Endkopfs (11 bzw. 51) in direkte Stützanlage bringbar ist.

3. Verbinder nach Anspruch 2, dadurch gekennzeichnet, daß Dichtungsringe (34, 74, 93 und 94) zwischen einen (11) der Köpfe der Innenkörper und den Mantel, zwischen dem Mantel (90) und dem genannten Teil (101) des Gehäuses und zwischen dem genannten Teil (101) des Gehäuses und dem anderen Kopf (51) eingesetzt sind, um die Dichtigkeit des Verbinders zu gewährleisten.

4. Verbinder nach einem der Ansprüche 1 bis 3, dadurch gekennzeichnet, daß die Köpfe der Innenkörper jeweils mit Endstücken (76) mit Ringnuten (77) versehen sind, welche jeweils der Klemmbefestigung einer dichten Umhüllung der beiden miteinander zu verbindenden Abschnitte der Sammelleitung dienen, und daß der Mantel eine ausreichende Ausdehnung hat, um die Endstücke zu überdecken.

5. Verbinder nach einem der Ansprüche 1 bis 4, dadurch gekennzeichnet, daß die Köpfe der Innenkörper mit teilweise mit einem Gewinde versehenen Blindbohrungen versehen sind, welche am Befestigungspunkt des jeweiligen Zugglieds angeordnet sind, daß das Ende jedes Zugglieds einen verdickten Kopf (39) hat, gefolgt von einem mit einem Außengewinde versehenen Nippel (41), und daß der Gewindenippel nach dem Einsetzen des Kopfs des Zugglieds in die zugeordnete Bohrung die Befestigung des Zugglieds an dem zugeordneten Kopf des jeweiligen Innenkörpers durch blockierenden Eingriff gewährleistet.

6. Verbinder nach einem der Ansprüche 1 bis 5, dadurch gekennzeichnet, daß in jeder Verlängerung, welche eine im wesentlichen halbzylindrische oder halbprismatische, hohle Form hat, welche im Bereich der Verbinder ausgeschweift ist, im zentralen Teil des Gehäuses Einrichtungen (20, 42, 43, 44) für die radiale Sicherung der beiden axialen Verlängerungen relativ zueinander vorgesehen sind, während ihre Verankerung an ihren Enden erfolgt.

7. Verbinder nach Anspruch 6, dadurch gekennzeichnet, daß die Einrichtungen für die radiale Sicherung der beiden Verlängerungen einerseits durch eine im mittleren Teil der Verlängerungen vorgesehene Gewindebohrung (20) und andererseits durch eine radial in Eingriff mit einer der Verlängerungen stehende Befestigungsschraube (44) gebildet sind, wobei ein am mittleren Teil der Befestigungsschraube angebrachter Anschlagring (42) jedwede Längsbewegung der Schraube relativ zu der sie aufnehmenden Verlängerung verhindert, um somit die gegenseitige Annäherung der Verlängerungen und ihre feste Verbindung miteinander beim Festziehen der Schraube in der anderen Verlängerung und eine Auseinanderbewegung der Verlängerung beim Lösen der Schraube zu gewährleisten.

8. Verbinder nach einem der Ansprüche 1 bis 7, dadurch gekennzeichnet, daß jede Verlängerung wenigstens zwei sich in Längsrichtung erstreckende und nebeneinander liegende Sitze (21, 22 und 61, 62) für Verbinderelemente definiert und daß Abstütz- und Befestigungsbereiche (23 und 24) für die Verbinder vorgesehen sind.

9. Verbinder nach einem der Ansprüche 1 bis 8, dadurch gekennzeichnet, daß jeder Endkopf drei gleichmäßig um seine Achse (45) herum angeordnete Verankerungsstellen (30, 31, 32) für Zugglieders aufweist und daß der ihn durchsetzedne axiale Duchlaß eine zentrale Öffnung (26) mit drei sich zwischen die Verankerungsstellen für die Zugglieder hinein erstreckenden Ausbuchtungen darstellt, wobei zwei der Ausbuchtungen (27 und 28) den Durchtritt der Verbinder gestatten während die dritte (29) den Durchtritt der damit verbundenen Leiter gestattet.

10. Verbinder nach einem der Ansprüche 1 bis 9, dadurch gekennzeichnet, daß die Zugglieder der beiden miteinander verbindenden Abschnitte der Sammelleitung bei der Verankerung der beiden Verlängerungen relativ zueinander paarweise miteinander fluchten.

FIG_1

## FIG_2

## FIG_3

FIG_4

FIG_5